# FASCICULE DE BREVET EUROPEEN

(11) **EP 1 535 451 B1**
(45) Date de publication et mention de la délivrance du brevet: **21.03.2012**
(21) Numéro de dépôt: 03769555.8
(22) Date de dépôt: 02.09.2003
(51) Int. Cl.: H04M 1/725, H04M 1/72, H04B 3/54

(54) **BASE CENTRALE POUR RESEAU LOCAL DE RADIOCOMMUNICATION PRIVE ET SYSTEME DE RADIOCOMMUNICATION INCLUANT UNE TELLE BASE**
BASISSTATION FÜR PRIVATES LOKALES FÜNKKOMMUNIKATIONSNETZWERK UND FÜNKKOMMUNIKATIONSSYSTEM MIT EINER SOLCHEN BASISSTATION
CENTRAL BASE FOR PRIVATE RADIOCOMMUNICATION LOCAL NETWORK AND RADIOCOMMUNICATION SYSTEM COMPRISING THE SAME

(30) Priorité: 03.09.2002 FR 0210887
(43) Date de publication de la demande: 01.06.2005
(73) Titulaire: Inventel Systèmes, 75005 Paris (FR)
(72) Inventeur: AMBERNY, Olivier, F-92160 Antony (FR); DEGUET, Bruno, 77210 AVON (FR); OLIVIER, Henri-Nicolas, F-92300 Levallois Perret (FR); CARREEL, Eric, F-92190 Meudon (FR)
(74) Mandataire: Kohrs, Martin
(86) Numéro de dépôt international: PCT/FR2003/002628
(87) Numéro de publication internationale: WO 2004/023768

(56) Documents cités:
- EP-A- 0 668 686
- EP-A- 1 076 443
- US-A- 4 701 945
- US-A- 5 533 101
- US-B1- 6 324 270

## Description

La présente invention est relative, aux basés centrales pour réseaux locaux de radiocommunication privés aux systèmes de radiocommunication incluant de telles bases, et aux réseaux locaux de radiocommunication privés incluant de tels dispositifs.

EP 0 668 686A divulgue un système de téléphone. US 5 553 101 A divulgue un système de téléphone sans fils. US 4 701945 A divulgue un système téléphonique courant porteur. EP 1 076 443 divulgue une méthode de communication.

Plus particulièrement, l'invention concerne une base centrale pour réseau local de radiocommunication privé, cette base centrale comprenant des circuits électroniques qui incluent une unité centrale électronique. est qui sont alimentés électriquement par au moins une ligne d'alimentation sous tension destinée à être connectée à une source d'énergie électrique, extérieure, ladite base centrale étant adaptée pour communiquer :
- d'une part, avec un réseau de télécommunication public,
- et d'autre part, avec au moins un périphérique de radiocommunication, selon un protocole de radiocommunication bidirectionnel numérique pour réseau local de radiocommunication privé (par exemple le protocole DECT ou le protocole BLUETOOTH).

Il est souvent souhaitable de faire communiquer la base centrale avec un ou plusieurs appareils extérieurs autres que des périphériques de radiocommunication, par exemple :
- pour échanger des informations avec au moins un dispositif domotique ou autre, en vue de faire communiquer indirectement ce dispositif domotique soit avec des périphériques de radiocommunication appartenant au réseau local de radiocommunication privé, soit avec des dispositifs éloignés par l'intermédiaire du réseau de télécommunication public,
- pour tester la base centrale, notamment à sa sortie d'usine,
- pour configurer la base centrale et/ou y charger des données ou des logiciels, à sa sortie d'usine, à son installation ou en cours d'utilisation.

Compte tenu des contraintes de coût importantes, pesant sur la fabrication des bases centrales pour réseaux locaux de radiocommunication privés, et pour que l'installation de la base centrale puisse être réalisée de la façon la plus simple possible par un utilisateur non averti, il n'est pas souhaitable d'ajouter à la base centrale un connecteur supplémentaire servant à communiquer avec des appareils extérieurs.

Par ailleurs, la base centrale peut bien entendu communiquer avec un appareil extérieur par voie radio selon ledit protocole de radiocommunication, mais cette communication implique de doter l'appareil extérieur de' capacités de radiocommunication conformes à ce protocole et renchérit par conséquent sensiblement ledit appareil extérieur. De plus, une telle communication radio implique que l'appareil extérieur soit paramétré de façon conforme à la configuration de la base centrale, ce qui peut poser des problèmes notamment lorsque le fabricant de l'appareil extérieur en question est différent du fabricant de la base centrale et/ou lorsque le fabricant ou l'installateur de l'appareil extérieur n'est pas spécialiste de radiocommunications.

La présente invention a donc pour but de proposer une base centrale du type défini ci-dessus, qui puisse communiquer avec au moins un appareil extérieur sans présenter de connecteur supplémentaire, sans induire de surcoût sensible de ladite base centrale et sans compliquer l'installation de cette base et dudit appareil extérieur.

A cet effet, selon l'invention, une base centrale du genre en question est caractérisée en ce qu'elle comporte un circuit d'interface qui est commandé par l'unité centrale électronique de ladite base centrale et qui est relié à ladite ligne d'alimentation, ce circuit d'interface étant adapté pour émettre et capter des messages sur ladite ligne d'alimentation, et. en ce que le circuit d'interface de la base centrale est adapté pour émettre et capter des signaux périodiques à haute fréquence représentatifs de messages émis et captés, et la base centrale comporte un filtre passe-bas adapté pour filtrer lesdits signaux périodiques à haute fréquence entre le circuit d'interface de la base centrale et au moins une partie des circuits électroniques de la base centrale.

la base centrale est adaptée pour émettre des messages alphanumériques sortants (notamment de type SMS) au moins vers le réseau de télécommunication public et pour recevoir des messages alphanumériques entrants au moins depuis ledit réseau de télécommunication public, l'unité centrale électronique de la base centrale étant adaptée pour :
(a) reconnaître au moins certains messages alphanumériques entrants destinés à un boîtier interface externe, dits messages de service, et pour faire générer sur la ligne d'alimentation, par ledit circuit d'interface de la base centrale, un message correspondant à chaque message de service entrant,
(b) et lorsqu'elle reçoit un message capté par le circuit d'interface de la base centrale sur la ligne d'alimentation, déterminer si ce message doit être-transmis vers l'extérieur et dans ce cas, émettre un message alphanumérique sortant, dit message de service sortant, correspondant au message capté.

Grâce à ces dispositions, on peut faire communiquer la base centrale par voie filaire avec un appareil extérieur en reliant ledit appareil extérieur à la ligne d'alimentation de la base centrale, donc sans que la base centrale ne comporte de connecteur supplémentaire.

Dans des modes de réalisation préférés de la base centrale selon l'invention, on peut éventuellement avoir recours en outre à l'une et/ou à l'autre des dispositions suivantes :
- le circuit d'interface de la base centrale est monté en dérivation sur ladite ligne d'alimentation ;
- le circuit d'interface de la base centrale est adapté pour émettre et capter des signaux périodiques à une fréquence comprise entre 100 et 500 kHz ;
- le circuit d'interface de la base centrale est commandé par l'unité centrale électronique de la base centrale par l'intermédiaire d'un contrôleur d'interface série.

La base centrale est eventuelement adaptée en outre pour émettre des messages alphanumériques sortants vers au moins un périphérique de radiocommunication en utilisant ledit protocole de radiocommunication, et pour recevoir des messages alphanumériques entrants depuis ledit périphérique de radiocommunication (les messages de service peuvent ainsi également être échangés avec des périphériques de radiocommunication du réseau local, notamment des téléphones mobiles).

Par ailleurs, l'invention a également pour objet un système de radiocommunication comprenant, une base centrale telle que définie ci-dessus et un boîtier interface externe, distinct de la base centrale, qui comprend lui-même :
- une unité centrale électronique,
- et un circuit d'interface commandé par ladite unité centrale électronique du boîtier interface externe et qui est relié à ladite ligne d'alimentation, ce circuit d'interface du boîtier interface externe étant adapté pour communiquer avec le circuit d'interface de la base centrale en émettant et en captant des messages sur ladite ligne d'alimentation.

Dans des modes, de réalisation préférés du de radiocommunication selon l'invention, on peut éventuellement avoir recours en outre à l'une et/ou à l'autre des dispositions suivantes :
- le circuit d'interface, du boîtier interface externe est monté en dérivation sur ladite ligne d'alimentation ;
- le circuit d'interface du boîtier interface externe est adapté pour émettre, et capter des signaux périodiques à haute fréquence représentatifs de messages émis et captés, et le boîtier interface externe comporte un filtre passe-bas adapté pour filtrer lesdits signaux périodiques à haute fréquence entre le circuit d'interface du boîtier interface externe et un dispositif d'alimentation électrique destiné à relier ladite ligne d'alimentation à la source d'énergie électrique extérieure
- le circuit d'interface du boîtier interface externe est adapté, pour émettre et capter des signaux périodiques à une fréquence comprise entre 100 et 500 kHz ;
- le circuit d'interface du boîtier interface externe est commandé par l'unité centrale électronique dudit boîtier interface externe par l'intermédiaire d'un contrôleur d'interface série ;
- la base centrale et le boîtier interface externe sont adaptés pour communiquer ensemble selon un protocole asynchrone semi-duplex
- le dispositif de radiocommunication-comporte en outre un appareil électronique extérieur, distinct du boîtier interface externe et communiquant avec l'unité centrale électronique dudit boîtier interface externe ;
- l'appareil électronique extérieur est choisi parmi un capteur, un actionneur et un dispositif de contrôle-commande centralisé adapté pour être relié à une pluralité de capteurs et actionneurs ;
- l'unité centrale électronique du boîtier interface externe est adaptée pour faire générer sur la ligne l'alimentation, par le circuit d'interface dudit boîtier interface externe, des messages destinés à être émis par la base centrale sous forme de messages de service sortants.

D'autres caractéristiques et avantages de l'invention apparaîtront au cours de la description. suivante d'une de ses formes de réalisation, donnée à titre d'exemple non limitatif, en regard des dessins joints.

Sur les dessins':
- la figure 1 est un schéma d'un réseau local de radiocommunication selon une forme de réalisation de l'invention, comprenant une base centrale, un boîtier interface externe relié à un dispositif domotique, et au moins un mobile,
- la figure 2 est un schéma bloc illustrant la base centrale et le boîtier interface reliés au dispositif domotique,
- et la figure 3 est un schéma électrique d'un circuit d'interface appartenant au de la figure 2.

Sur les différentes figures, les mêmes références désignent des éléments identiques ou similaires.

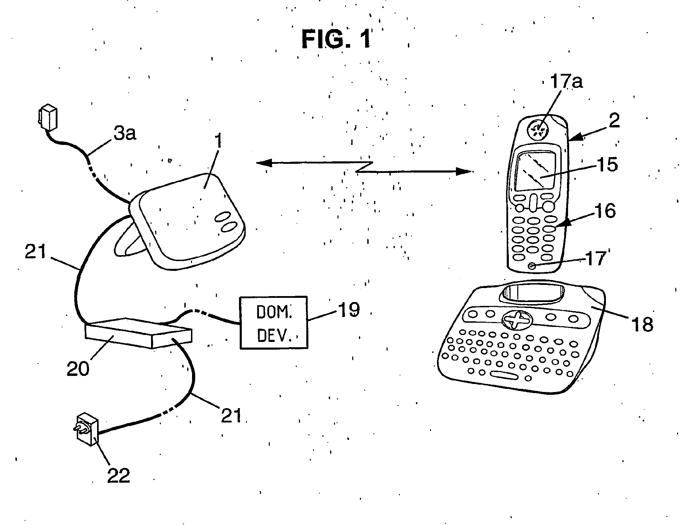

Comme représenté sur la figure 1, l'invention concerne un réseau local de radiocommunication privé fonctionnant sous un protocole de télécommunication bidirectionnel numérique, de préférence le protocole "DECT" ou le protocole "BLUETOOTH".

Ce réseau local de radiocommunication comporte une base centrale 1, généralement fixe, et un ou plusieurs périphériques 2 généralement mobiles et constitués par exemple par des combinés téléphoniques portatifs sans fil.

La base centrale 1 est reliée au réseau téléphonique public 3, généralement par l'intermédiaire d'une liaison filaire 3a constituant un raccordement privé audit réseau téléphonique public et relié à une ligne téléphonique de ce réseau.

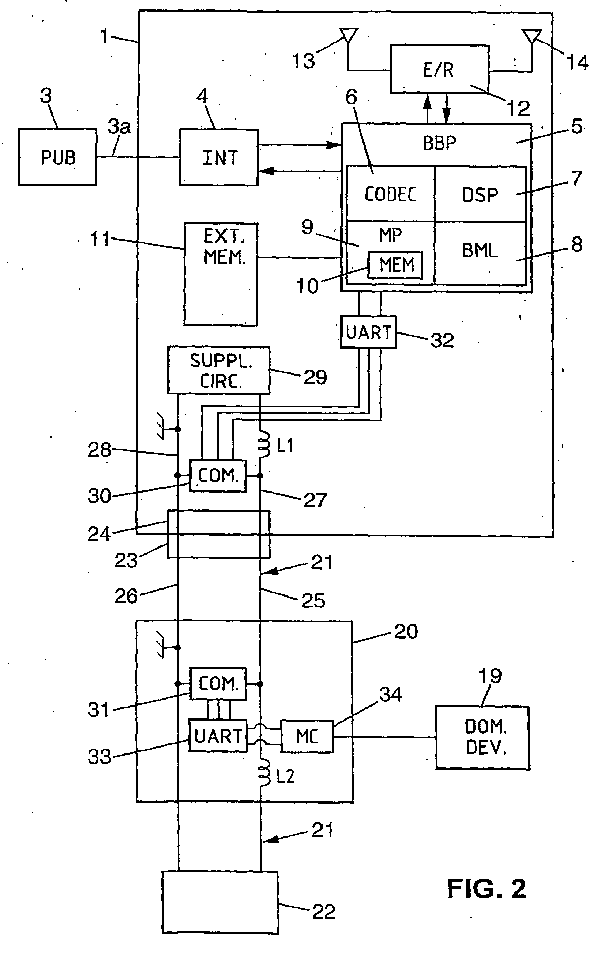

Comme représenté, sur la figure 2, ce raccordement 3a est relié à un circuit d'interface 4 (INT) qui communique de façon bidirectionnelle avec une unité centrale 5 (BBP) ou processeur en bande de base ("BASE BAND PROCESSOR").

L'unité centrale 5 comporte elle-même généralement plusieurs modules, notamment :
- un module 6 (CODEC) adapté pour moduler et démoduler les signaux analogiques du réseau public 3,
- un processeur (DSP) 7 adapté pour effectuer différents traitements des signaux sonores,
- un circuit logique rapide 8 (BML) ("BURST MODE LOGIC"),
- un microprocesseur 9 (MP) comprenant de préférence une mémoire interne 10 (MEM) telle qu'une mémoire vive ou autre.

De plus, l'unité centrale 5 est généralement reliée également à une mémoire externe 11 (EXT. MEM.) telle qu'une mémoire EEPROM ainsi qu'un circuit radio 12 d'émission et de réception (E/R) lui-même relié à une ou plusieurs antennes d'émission/réception 13, 14.

Par ailleurs, chaque périphérique 2, qui communique avec la base centrale 1 par voie radio, comporte également une unité centrale (non représentée) identique ou similaire à l'unité centrale 5 de la base centrale 1, un circuit radio et des antennes (non représentés) identiques ou similaires à ceux 12, 13, 14 de la base centrale 1, et le cas échéant une mémoire externe (non représentée) identique ou similaire à celle 11 de la base centrale 1. De plus, l'unité centrale de chaque périphérique 2 est reliée à une interface de sortie telle qu'un écran 15 (figure 1) et à une interface d'entrée telle qu'un clavier 16, de même qu'à un microphone 17 et à un écouteur 17a.

Le ou les périphériques 2 peuvent bien entendu servir classiquement à établir une communication vocale, soit entre eux, soit avec l'extérieur par l'intermédiaire du réseau de télécommunications public 3, mais ils peuvent également être utilisés pour, envoyer ou consulter des messages alphanumériques notamment de type SMS (correspondant par exemple à la norme ETSI ES 201 912), par exemple comme expliqué dans le document FR-A-2 819 972.

Lorsque les périphériques 2 doivent être utilisées pour envoyer, des messages alphanumériques, ces messages alphanumériques peuvent être entrés dans les périphériques 2 soit au moyen de leur clavier propre 16, soit en raccordant lesdits périphériques à un clavier supplémentaire 18 plus complet, comme décrit par exemple dans la demande de brevet français n° 02 07644 déposée le 20 juin 2002 par la société INVENTEL SYSTEMES.

Par ailleurs, selon la présente invention, les messages alphanumériques en question sont également utilisés pour faire dialoguer un ou plusieurs appareils électroniques extérieurs 19 (DOM. DEV.), notamment des appareils domotiques, avec l'extérieur et/ou avec le ou les périphériques 2, par l'intermédiaire de la base centrale 1.

L'appareil domotique 19 peut le cas échant être constitué par :
- un capteur, par exemple un détecteur d'intrusion, un détecteur d'incendie, un détecteur d'eau, un capteur de température, ou autre,
- un actionneur, par exemple un commande de volet électrique, une commande d'éclairage, une commande de chauffage, une sirène d'alarme ou autre,
- ou encore un appareil de contrôle-commande relié lui-même à un ensemble de capteurs et/ou d'actionneurs, par exemple une centrale d'alarme.

Comme représenté sur la figure 1, chaque appareil domotique 19 est en liaison avec un boîtier interface 20 externe à la base centrale 1, par voie filaire, par radio (selon un protocole de radiocommunication unidirectionnel ou bidirectionnel), par infra-rouge ou autre, lequel boîtier interface 20 est relié au câble d'alimentation électrique 21 de la base centrale 1.

Ce câble d'alimentation 21 relie la base centrale 1 à un boîtier d'alimentation 22 qui se branche sur le réseau. électrique alternatif et qui est généralement adapté pour produire un courant périodique redressé de plus faible tension que le courant du réseau électrique, à une fréquence généralement inférieure à 300 Hz, notamment de l'ordre de 100 Hz lorsque le réseau fournit une tension alternative à 50 Hz.

Comme représenté sur la figure 2, le câble d'alimentation électrique 21 comporte un connecteur 23 qui' se raccorde à un connecteur complémentaire 24 de la base centrale 1. Le câble d'alimentation électrique 21 comporte au moins une ligne sous tension 25 et une ligne 26 reliée à la masse, la ligne 25 étant reliée par les connecteurs 23, 24 à une ligne sous tension 27 à l'intérieur de la base centrale 1 tandis que la ligne 26 est reliée par l'intermédiaire des connecteurs 23 et 24 à une ligne 28 reliée à la base à l'intérieur de la base centrale 1.

Les lignes 27, 28 sont reliées à un circuit d'alimentation 29 (SUPPL. CIRC.) qui alimente au moins certains des circuits électroniques de la base centrale 1.

On notera que le câble d'alimentation électrique 21 pourrait comporter plusieurs paires de lignes conductrices alimentant le cas échéant plusieurs circuits d'alimentation internes à la base centrale 1, auquel cas le boîtier interface 20 et ses composants internes pourraient n'être raccordés qu'à l'une de ces paires de lignes conductrices et isolés des autres. En particulier, le câble d'alimentation électrique 21 pourrait comporter deux paires de lignes conductrices, dont une paire de lignes conductrice réservée à, l'alimentation d'un chargeur (non représenté) intégré à la basé centrale 1 et destiné à recharger les batteries du périphérique 2, cette paire de lignes conductrices étant isolée électriquement des composants du boîtier interface. 20.

Selon l'invention le boîtier interface 20 communique avec la base. centrale 1 par l'intermédiaire de deux circuits d'interface 30, 31 (COM.) appartenant respectivement à la base centrale 1 et au boîtier interface 20.

Le circuit d'interface 30 est branché en dérivation entre les lignes conductrices 27, 28, tandis que le circuit d'interface 31 est branché en dérivation entre les lignes conductrices 25, 26.

Ces deux circuits d'interface 30, 31 sont adaptés pour échanger entre eux des messages sous forme de signaux électriques modulés, obtenus par modulation (notamment modulation d'amplitude) d'une porteuse ayant une fréquence de préférence supérieure à 50 kHz et avantageusement comprise entre 100 et 500 kHz, laquelle porteuse est émise sur la ligne d'alimentation formée par les lignes sous tension 25, 27.

A titre d'exemple, l'émission d'un bit égal à 0 par l'un des deux circuits d'interface 30, 31 peut se traduire par l'émission de la porteuse sur les lignes sous tension 25, 27, tandis que l'émission d'un bit égal à 1 peut se traduire par l'absence de porteuse sur les lignes sous tension 25, 27, étant entendu que les circuits d'interface 30, 31 n'émettent aucune porteuse lorsqu'ils n'ont aucun message à échanger entre eux.

Pour éviter que ces signaux modulés ne perturbent le fonctionnement de la base centrale 1 et du boîtier d'alimentation 22, et pour éviter également que ces signaux ne soient perturbés par ce fonctionnement, on prévoit avantageusement un filtre passe-bas sur la ligne sous tension 27 entre le circuit d'interface 30 et le circuit d'alimentation 29, ce filtre passe-bas pouvant avantageusement être constitué par une inductance L1, d'une valeur par exemple de l'ordre de 100 µH; montée en série sur la ligne conductrice 27.

Pour les mêmes rasons, le boîtier interface 20 peut également comporter un filtre passe-bas entre le circuit d'interface 31 et le boîtier d'alimentation 22, ce filtre passe-bas pouvant avantageusement être constitué par une inductance L2, d'une valseur par exemple de l'ordre de 100 µH, disposée en série sur la ligne sous tension 25.

Chacun des circuits d'interface 30, 31 peut avantageusement être commandé par un contrôleur d'interface série, notamment un émetteur/récépteur asynchrone universel (UART).

Le contrôleur d'interface série 32 de la base 1 communique lui-même avec l'unité centrale électronique 5 de ladite base, tandis que le contrôleur d'interface série 33 du boîtier d'interface 20 communique avec un microcontrôleur ou microprocesseur 34 (MC) appartenant audit boîtier d'interface. Ce microcontrôleur 34 communique par ailleurs avec le ou les appareils domotiques 19.

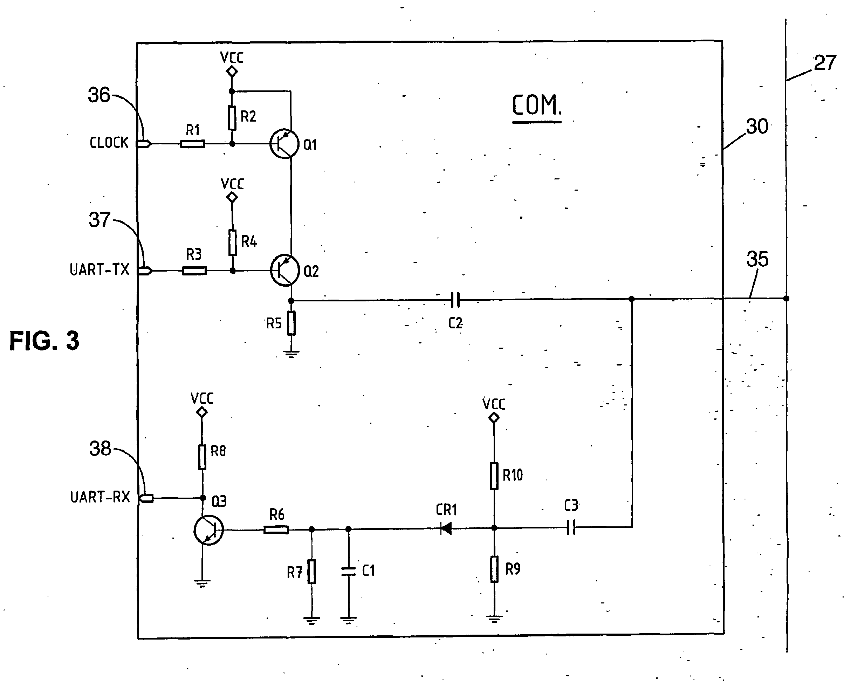

Comme représenté sur la figure 3, le circuit d'interface 30 peut comporter une borne d'entrée/sortie 35 reliée à la ligne sous tension 27, une borne d'entrée de signal d'horloge 36 (CLOCK) reliée à une borne de sortie de signal d'horloge du contrôleur d'interface série 32, une borne d'entrée de données (UART-TX) reliée à la borne d'émission de données du contrôleur d'interface série 32, et une borne de sortie de données 38 (UART-RX) reliée à la borne de réception de données du contrôleur d'interface série 32.

La borne d'entrée de signal d'horloge 36 est reliée, par l'intermédiaire d'une résistance R1 (ayant par exemple une valeur de l'ordre de 4, 7 kΩ), à la base d'un transistor PNP Q1 (par exemple de type BC807).

L'émetteur de ce transistor est par ailleurs relié à une borne d'alimentation électrique à une tension continue VCC égale par exemple à 3 Volts, ou le cas échéant à 5 Volts, cette borne d'alimentation étant elle-même reliée à un circuit d'alimentation en courant continu (non représenté), lui-même alimente par l'intermédiaire de la ligne sous tension 27.

La base du transistor Q1 est reliée à la borne d'alimentation VCC par l'intermédiaire d'une résistance R2 (valant par exemple de l'ordre de 4, 7 kΩ), et le collecteur du transistor Q1 est relié à l'émetteur d'un transistor PNP Q2 (par exemple de type BC807).

Le collecteur de ce transistor Q2 est relié à la masse par l'intermédiaire d'une résistance R5 (valant par exemple de l'ordre de 100. kΩ) dont l'émetteur est relié à la borne d'entrée de données 37 par l'intermédiaire d'une résistance R3 (valant par exemple de l'ordre de 4,7 kΩ), la base du transistor Q2 étant par ailleurs reliée à la borne d'alimentation VCC par l'intermédiaire d'une résistance R4 (valant par exemple de l'ordre de 4,7 kΩ).

Le collecteur du transistor Q2 est également relié à la borne d'entrée/sortie 35, par l'intermédiaire d'une capacité C2 servant de filtre passe-haut et valant par exemple de l'ordre de 10 nF.

Ainsi, lorsque la borne d'entrée de données 37 reçoit un signal haut, correspondant à un bit égal à 1, le transistor Q2 n'est pas passant, de sorte qu'aucun signal n'est émis vers la borne d'entrée/sortie 35, tandis que lorsque la borne d'entrée de données 37 reçoit un signal bas, correspondant à un bit égal à 0, le transistor Q2 est passant et laisse passer la porteuse reçue par la borne de signal d'horloge 36, vers la borne d'entrée/sortie 35.

Cette borne d'entrée/sortie 35 est par ailleurs reliée à la base d'un transistor NPN Q3 (par exemple de type BC817), par l'intermédiaire :
- d'une capacité C3 servant de filtre passe-haut et valant par exemple de l'ordre de 1 nF,
- d'une diode CR1 (par exemple de type 1N4148) qui est passante vers la base du transistor Q3,
- et d'une résistance R6 valant par exemple de l'ordre de 33 kΩ.

L'émetteur du transistor Q3 est relié à la masse et son collecteur est relié d'une part, à la borne de so'rtie de données 38 et d'autre part, à la borne d'alimentation VCC par l'intermédiaire dune résistance R8 qui peut être de l'ordre de 33 kΩ.

Entre la diode CR1 et la résistance R6 peuvent par ailleurs être connectée en dérivation :
- une résistance R7 ayant une valeur par exemple de l'ordre de 56 kΩ et reliée à la masse,
- et une capacité C1 ayant par exemple une valeur de l'ordre de 470 pF.

Entre la capacité C3 et la diode CR1 peuvent par ailleurs être connectées en dérivation, d'une part, une résistance R10 ayant une valeur de l'ordre de 100 kΩ et reliée à la borne d'alimentation VCC (cette valeur est valable pour une tension d'alimentation de 3 Volts, et serait avantageusement portée à environ 150 kΩ pour une tension d'alimentation de 5 Volts), et d'autre part, une résistance R9 reliée à la masse et ayant par exemple une valeur d'environ 33 kΩ.

Ainsi, lorsqu'un signal modulé à haute fréquence est présent sur la ligne sous tension 27, ce signal est transmis à la borne de sortie de données 38 reliée au contrôleur interface série 32.

Les capacités C2 et C3 permettent que les variations de tension de relativement basses fréquences présentent sur la ligne sous tension 27 lorsqu'elle est alimentée par une tension périodique redressée ne perturbent pas le fonctionnement des composants électroniques du circuit d'interface 31.

Par ailleurs, la capacité C1 permet de lisser le signal haute fréquence reçu de la borne d'entrée/sortie 35 pour le transformer en signal continu lorsqu'un tel signal est présent sur la ligne sous tension 27, de sorte que la borne de sortie 38 émet soit un signal bas, soit un signal haut, suivant que la porteuse haute fréquence est présente ou non a la borne d'entrée/sortie 35.

Le circuit d'interface 31 du boîtier d'interface 20 est par ailleurs identique au circuit d'interface 30 décrit précédemment, si ce n'est que sa borne 35 d'entrée/sortie est reliée à la ligne sous tension 25 et que ses bornes 36, 37, 38 sont reliées aux bornes correspondantes du contrôleur d'interface série 33.

Grâce à ces, dispositions, on peut faire communiquer le boîtier interface 20 avec la base centrale 1 selon un protocole série RS 232 classique de type semi-duplex, les données étant codées par exemple sur 8 bits avec un bit de démarrage et un bit de fin.

Les contrôleurs d'interface séries 32, 33 sont par ailleurs adaptés pour détecter les collisions de messages, c'est-à-dire les émissions simultanées de messages par chacun d'eux, et pour réémettre, avec des temporisations différentes, les messages ou les parties de messages qui ont fait l'objet de collisions.

Grâce à la communication ainsi établie entre la base centrale 1 et le boîtier interface 20, ce boîtier interface 20 peut générer des messages alphanumériques qui sont transmis à la base centrale 1 et que celle-ci peut, au moins dans certains cas, transformer en messages de type SMS, pour les envoyer vers un destinataire extérieur au réseau local de radiocommunication, par l'intermédiaire du réseau public 3.

La base centrale, 1 peut par ailleurs transmettre les messages alphanumériques provenant du boîtier interface 20, vers un ou plusieurs périphériques 2 du réseau local de radiocommunication.

De telles émissions de messages alphanumériques peuvent avoir lieu :
- soit lorsqu'il se produit un évènement prédéterminé détecté par l'appareil domotique 19,
- soit à des moments déterminés à l'avance, par exemple lorsqu'il est souhaitable d' envoyer vers l'extérieur du réseau ou vers un périphérique 2 du réseau, une mise à jour d'informations provenant du dispositifs domotique 19,
- soit en réaction à un message alphanumérique SMS reçu par la base centrale 1, depuis l'extérieur du réseau local de radiocommunication ou éventuellement depuis l'un des périphériques 2 du réseau local (dans ce dernier cas, le message reçu par la base 1 pourrait ne pas être de type SMS).

Lorsque la base centrale 1 reçoit un message alphanumériques de type SMS, depuis le réseau de télécommunication public 3 ou depuis l'un des périphériques 2 du réseau local de radiocommunication, ce message alphanumérique entrant est reconnu par l'unité centrale 5 de la base 1 comme étant de type SMS, de façon classique De plus, s'il s'agit d'un message destiné à être transmis au boîtier interface 20, ce message comporté un code prédéterminé que l'unité centrale électronique 5 de la base 1 est adaptée pour reconnaître.

Dans ce cas, le message alphanumérique est identifié comme étant un message dit ici "de service", destiné au boîtier interface 20, et ledit message alphanumérique est transformé par la base centrale 1 en un message conforme au protocole de communication série pour être transmis au contrôleur d'interface série 32 qui émet alors des signaux' correspondants vers le circuit d'interface 30.

Ce circuit d'interface 30 génère alors des signaux modulés correspondants sur les lignes sous tension 27, 25, de façon que ces signaux soient reçus par le circuit d'interface 31, puis transmis au contrôleur d'interface série 33, lequel contrôleur d'interface série 33 transmet lui-même ce message au microcontrôleur 34.

Il est ainsi possible, en envoyant à la base centrale 1 un message alphanumérique de type SMS, soit de commander le dispositif' domotique 19, soit de demander au microcontrôleur 34 des informations concernant le dispositif domotique 19, par exemple des valeurs de mesure ou des états de capteurs tout ou rien.

Lorsqu'un tel message de service entrant a été transmis au boîtier interface 20, ledit boîtier interface' 20 peut ensuite y répondre, auquel cas le microcontrôleur 34 génère un message destiné à être retransmis sous forme de message alphanumérique SMS, lequel message est transmis d'abord au contrôleur d'interface série 33, puis au circuit d'interface 31, puis au circuit d'interface 30, au contrôleur d'interface série 32 et enfin à l'unité centrale électronique 5 de la base centrale 1, laquelle unité centrale électronique génère le message alphanumérique SMS sortant (dit ici message de service sortant puisque provenant du boîtier interface 20) destiné à être émis vers le réseau de télécommunication public 3 ou vers un ou plusieurs périphériques 2 du réseau local de radiocommunication.

Les messages émis selon le protocole série entre l'unité centrale 1 et le boîtier interface 20 peuvent avantageusement être émis sous forme de trames prédéterminées.

A tire d'exemple, les messages générés par le microcontrôleur 34 et transmis à l'unité centrale électronique 5 de la base centrale, peuvent se présenter sous la forme suivante :
- un signal de début de trame,
- un octet indiquant la langueur de la trame en nombre d'octets,
- un octet réservé au type de commande SMS,
- un octet réservé à une sous-commande SMS,
- un octet indiquant la taille de l'adresse appelée (indiquant le nombre n, d'octets de l'adresse appelée),
- l'adresse appelée, sur n octets, c'est-à-dire par exemple le numéro de téléphone ou l'adresse interne au réseau local de radiocommunication, du destinataire du message SMS,
- un octet indiquant à taille du contenu du message, c'est-à-dire le nombre p d'octets correspondant au contenu du message,
- le contenu du message, sur p octets,
- une clé de vérification de l'intégrité du message, sur un octet,
- et un signal de fin de trame.

D'autres trames prédéfinies sont prévues lorsque l'unité centrale 1 transmet au boîtier interface 20 un message alphanumérique SMS entrant, lorsque le boîtier d'interface 20 va consulter une boîte aux lettres de messages stockés par exemple dans la mémoire de l'unité centrale 1, etc.

On notera que le boîtier d'interface 20 pourrait être utilisé non pas pour recevoir des messages correspondant à des messages SMS entrants ou émettre des messages destinés à être transformés en messages SMS sortants, mais par exemple :
- pour se raccorder à un appareil électronique tel qu'un téléphone mobile GSM, UMTS ou autre, ou encore un assistant numérique personnel (PDA), notamment pour :
   - télécharger des données depuis cet appareil électronique vers la base centrale 1 et/ou vers le ou les périphériques 2,
   - ou pour transférer des données depuis le ou les périphériques 2 et/ou depuis la base centrale 1 vers cet appareil électronique, par exemple pour transférer un répertoire d'adresses téléphoniques ou autres,
   - pour synchroniser des répertoires d'adresses téléphonique ou autres présents à la fois sur l'appareils électronique relié au boîtier interface 20 et sur l'unité centrale 1 ou les périphériques 2,
   - ou encore pour transférer ou synchroniser tous autres fichiers ou ensemble de fichiers numériques tels que : emploi du temps, tâches à accomplir, etc. ;
- ou encore, notamment lorsque la base centrale 1 fonctionne selon le protocole DECT, faire communiquer cette base centrale 1 avec un détecteur radio fonctionnant selon la norme BLUETOOTH, connecté au boîtier interface 20 ou intégré à ce boîtier, de façon que le dispositif BLUETOOTH puisse informer la base centrale 1 de la présence ou de l'absence d'un utilisateur ayant un téléphone mobile (notamment de type GSM ou UMTS) doté lui-même d'un dispositif de communication à la norme BLUETOOTH : la base centrale 1 peut alors informer le réseau extérieur auquel elle est raccordée lorsqu'elle détermine que cet utilisateur est absent, de façon que ce réseau redirige alors automatiquement vers ledit téléphone mobile, les appels entrants qui auraient normalement été destinés à transiter par ladite base 1 ;
- pour transférer dans la base centrale 1, des programmes, ou des paramètres de fonctionnement, ou d'autres données, notamment lors de la sortie d'usine, de l'expédition ou de la mise en service de la base centrale 1, auquel cas le boîtier interface 20 peut être raccordé par exemple à un micro-ordinateur ou similaire destiné à effectuer ce transfert d'informations,
- ou encore pour tester la base 1 notamment à sa sortie d'usine, auquel cas le boîtier interface 20 peut être raccordé à un micro-ordinateur ou autre dispositif permettant d'effectuer les tests requis pour vérifier le bon fonctionnement de la base centrale 1.

On notera par ailleurs, que le boîtier interface 20, au lieu d'être monté en série sur le câble d'alimentation électrique 21, pourrait être monté en dérivation soit sur ce câble, soit sur un connecteur spécifique permettant par exemple de raccorder ce câble à la base centrale 1.

On notera enfin que plusieurs boîtiers interface 20 pourraient être raccordés à la même base centrale 1 comme décrit précédemment, et que plusieurs dispositifs domotiques 19 pourraient communiquer avec chaque boîtier interface 20.

## Revendications

1. Base centrale (1) pour réseau local de radiocommunication privé, cette base centrale comprenant des circuits électroniques qui incluent une unité centrale électronique (5) et qui sont alimentés électriquement par au moins une ligne d'alimentation sous tension (27) destinée à être connectée à une source d'énergie électrique extérieure, ladite base centrale étant adaptée pour communiquer : - d'une part, avec un réseau de télécommunication public (3), - et d'autre part, avec au moins un périphérique de radiocommunication (2), selon un protocole de radiocommunication bidirectionnel numérique pour réseau local de radiocommunication privé, ladite base comportant un circuit d'interface (30) qui est commandé par l'unité centrale électronique (5) de ladite base centrale et qui est relié à ladite ligne d'alimentation (27), ce circuit d'interface étant adapté pour émettre et capter des messages sur ladite ligne d'alimentation, et en ce que le circuit d'interface (30) de la base centrale est adapté pour émettre et capter des signaux périodiques à haute fréquence représentatifs de messages émis et captés, et la base centrale comporte un filtre passe-bas (L1) adapté pour filtrer lesdits signaux périodiques à haute fréquence entre le circuit d'interface (30) de la base centrale et au moins une partie des circuits électroniques de la base centrale,
la base centrale étant adaptée pour émettre des messages alphanumériques sortants au moins vers le réseau de télécommunication public (3) et pour recevoir des messages alphanumériques entrants au moins depuis ledit réseau de télécommunication public, l'unité centrale électronique (5) de la base centrale étant adaptée pour : (a) reconnaître au moins certains messages alphanumériques entrants destinés à un boîtier interface externe (20), dits messages de service, et pour faire générer sur la ligne d'alimentation (27), par ledit circuit d'interface (30) de la base centrale, un message correspondant à chaque message de service entrant, (b) et lorsqu'elle reçoit un message capté par le circuit d'interface (30) de la base centrale sur la ligne d'alimentation (27), déterminer si ce message doit être transmis vers l'extérieur et dans ce cas, émettre un message alphanumérique sortant, dit message de service sortant, correspondant au message capté.

2. Base centrale selon la revendication 1, adaptée en outre pour émettre des messages alphanumériques sortants vers au moins un périphérique de radiocommunication (2) en utilisant ledit protocole de radiocommunication, et pour recevoir des messages alphanumériques entrants depuis ledit périphérique de radiocommunication.

3. Base centrale selon la revendication 1 ou 2, dans laquelle le circuit d'interface (30) de la base centrale est monté en dérivation sur ladite ligne d'alimentation.

4. Base centrale selon l'une quelconque des revendications précédentes, dans laquelle le circuit d'interface (30) de la base centrale est adapté pour émettre et capter des signaux périodiques à une fréquence comprise entre 100 et 500 kHz.

5. Base centrale selon l'une quelconque des revendications précédentes, dans laquelle le circuit d'interface (30) de la base centrale est commandé par l'unité centrale électronique (5) de la base centrale par l'intermédiaire d'un contrôleur d'interface série (32).

6. Système de radiocommunication comprenant une base centrale (1) selon l'une quelconque des revendications précédentes et un boîtier interface externe (20), distinct de la base centrale, qui comprend lui-même : - une unité centrale électronique (34), et un circuit d'interface (31) commandé par ladite unité centrale électronique du boîtier interface externe et qui est relié à ladite ligne d'alimentation (25, 27), ce circuit d'interface, (31) du boîtier interface externe étant adapté pour communiquer avec le circuit d'interface (30) de la base centrale en émettant et en captant des messages sur ladite ligne d'alimentation (25, 27).

7. Système de radiocommunication selon la revendication 6, dans lequel le circuit d'interface (31) du boîtier interface externe est monté en dérivation sur ladite ligne d'alimentation (25, 27).

8. Système de radiocommunication selon la revendication 6 ou la revendication 7, dans lequel le circuit d'interface (31) du boîtier interface externe est adapté pour émettre et capter des signaux périodiques à haute fréquence représentatifs de messages émis et captés, et le boîtier interface externe (20) comporte un filtre passe-bas (L2) adapté pour filtrer lesdits signaux périodiques à haute fréquence entre le circuit d'interface (31) du boîtier interface externe et un dispositif d'alimentation électrique (22) destiné à relier ladite ligne d'alimentation (25,27) à la source d'énergie électrique extérieure.

9. Système de radiocommunication selon la revendication 6, dans lequel le circuit d'interface (31) du boîtier interface externe est adapté pour émettre et capter des signaux périodiques à une fréquence comprise entre 100 et 500 kHz.

10. Système de radiocommunication selon l'une quelconque des revendications 6 à 9, dans lequel le circuit d'interface (31) du boîtier interface externe est commandé par l'unité centrale électronique (34) dudit boîtier interface externe par l'intermédiaire d'un contrôleur d'interface série (33).

11. Système de radiocommunication selon l'une quelconque des revendications 6 à 10, dans lequel la base centrale (1) et le boîtier interface externe (20) sont adaptés pour communiquer ensemble selon un protocole asynchrone semi-duplex.

12. Système de radiocommunication selon l'une quelconque des revendications 6 a 11, comportant en outre un appareil électronique extérieur (19), distinct du boîtier interface externe (20) et communiquant avec l'unité centrale électronique (31) dudit boîtier interface externe.

13. Système de radiocommunication selon la revendication 12, dans lequel l'appareil électronique extérieur (19) est choisi parmi un capteur, un actionneur et un dispositif de contrôle-commande centralisé adapté pour être relié à une pluralité de capteurs et actionneurs.

14. Système de radiocommunication selon l'une quelconque des revendications 6 à 13 comprenant une base centrale (1) selon la revendication 1, et dans lequel l'unité centrale électronique (34) du boîtier interface externe (20) est adaptée pour faire générer sur la ligne d'alimentation (25,27) par le circuit d'interface (31) dudit boîtier interface externe, des messages destinés à être émis par la base centrale (1) sous forme de messages de service sortants.

## Claims

1. Central base (1) for a private radio-communications local network, this central base comprising electronic circuits that include an electronic central processing unit (5) and that are electrically powered via at least one live power supply line (27) intended to be connected to an external electric energy source, said central base being adapted to communicate: - on one hand, with a public telecommunications network (3), - and on the other hand, with at least one radio-communications peripheral device (2), according to a digital bi-directional radio-communications protocol for private radio-communication local networks, said base comprising an interface circuit (30) that is controlled by an electronic central processing unit (5) of said central base and that is connected to said power supply line (27), this interface circuit being adapted to transmit and capture messages over said power supply line, and in that this interface circuit (30) of the central base is adapted in order to transmit and capture periodic signals at high frequency representative of messages transmitted and captured, in addition the central base comprises a low-pass filter (L1) adapted to filter said periodic signals at high frequency between the interface circuit (30) of the central base and at least some of the electronic circuits of the central base,
the central base being adapted to transmit outgoing alphanumeric messages at least to the public telecommunications network (3) and to receive incoming alphanumeric messages at least from said public telecommunications network, the electronic central processing unit (5) of the central base being adapted to: (a) recognise at least some incoming alphanumeric messages intended for an external interface unit (20), called service messages, and to generate on the power supply line (27), via said interface circuit (30) of the central base, a message corresponding to each incoming service message, (b) and when it receives a message captured by the interface circuit (30) of the central base on the power supply line (27), to determine if this message must be transmitted to the exterior and in this case, to transmit an outgoing alphanumeric message, called an outgoing service message, corresponding to the message captured.

2. Central base according to claim 1, also adapted to transmit outgoing alphanumeric messages to at least one radio-communication peripheral device (2) using said radio-communication protocol, and to receive incoming alphanumeric messages from said radio-communication peripheral device.

3. Central base according to claim 1 or 2, wherein the interface circuit (30) of the central base is mounted as a derivation on said power supply line.

4. Central base according to any one of the preceding claims, wherein the interface circuit (30) of the central base is adapted to transmit and capture periodic signals at a frequency comprised between 100 and 500 kHz.

5. Central base according to any one of the preceding claims, wherein the interface circuit (30) of the central base is controlled by th electronic central processing unit (5) of the central base via the intermediary of the serial interface controller (32).

6. System for radio-communication comprising a central base (1) according to any one of the preceding claims and an external interface unit (20), distinct from the central base, that itself comprises: - an electronic central processing unit (34), and an interface circuit (31) controlled by said electronic central processing unit of the external interface unit and that is connected to said power supply line (25, 27), this interface circuit, (31) of the external interface unit being adapted to communicate with the interface circuit (30) of the central base while transmitting and capturing messages on said power supply line (25, 27).

7. System for radio-communication according to claim 6, wherein the A-1 Z interface circuit (31) of the external interface unit is mounted as a derivation on said power supply line (25, 27).

8. System for radio-communication according to claim 6 or claim 7, wherein the interface circuit (31) of the external interface unit is adapted to transmit and capture periodic signals at high frequency representative of transmitted and captured messages, and the external interface unit (20) comprises a low-pass filter (L2) adapted to filter said high frequency periodic signals between the interface circuit (31) of the external interface unit and an electrical power supply device (22) intended to connect said power supply line (25, 27) to the external electrical energy source.

9. System for radio-communication according to claim 6, wherein the interface circuit (31) of the external interface unit is adapted to transmit and capture periodic signals at a frequency comprised between 100 and 500 kHz.

10. System for radio-communication according to any one of claims 6 to 9, wherein the interface circuit (31) of the external interfaced unit is controlled via the electronic central processing unit (34) of said external interface unit via the intermediary of a serial interface controller (33).

11. System for radio-communication according to any one of claims 6 to 10, wherein the central base (1) and the external interface unit (20) are adapted to communicate together according to a half-duplex asynchronous protocol.

12. System for radio-communication according to any one of claims 6 to 11, comprising in addition an external electronic device (19), distinct from the external interface device (20) and communicating with the electronic central unit (31) of said external interface unit.

13. System for radio-communication according to claim 12, wherein the exterior electronic device (19) is selected from among a capture device, an actuator and a centralised command-control device adapted to be connected to a plurality of capture devices and actuators.

14. System for radio-communication according to any one of claims 6 to 13 comprising a central base (1) according to claim 1, and wherein the electronic central processing unit (34) of the external interface unit (20) is adapted to generate on the power supply line (25, 27) via the interface circuit (31) of said external interface unit, messages intended to be transmitted via the central base (1) in the form of outgoing service messages.

## Patentansprüche

1. Zentrale Basisstation (1) für ein privates lokales Funkkommunikationsnetzwerk, wobei diese zentrale Basisstation elektronische Schaltkreise aufweist, die eine elektronische Zentraleinheit (5) umfassen und über mindestens eine unter Spannung stehende Versorgungsleitung (27), die dazu bestimmt ist, an eine Außenquelle elektrischer Energie angeschlossen zu werden, elektrisch gespeist werden, wobei die zentrale Basisstation geeignet ist, einerseits mit einem öffentlichen Telekommunikationsnetzwerk (3) und andererseits mit mindestens einem Funkkommunikationsperipheriegerät (2) gemäß einem digitalen bidirektionalen Funkkommunikationsprotokoll für privates lokales Funkkommunikationsnetzwerk zu kommunizieren, wobei die Basisstation einen Schnittstellenschaltkreis (30) aufweist, der durch die elektronische Zentraleinheit (5) der zentralen Basisstation gesteuert wird und mit der Versorgungsleitung (27) verbunden ist, wobei dieser Schnittstellenschaltkreis geeignet ist, Nachrichten über die Versorgungsleitung zu senden und zu erfassen, und wobei der Schnittstellenschaltkreis (30) der zentralen Basisstation geeignet ist, gesendeten und erfassten Nachrichten repräsentative periodischer Hochfrequenzsignale zu senden und zu erfassen, und die zentrale Basisstation ein Tiefpassfilter (L1) aufweist, das geeignet ist, die periodischen Hochfrequenzsignale zwischen dem Schnittstellenschaltkreis (30) der zentralen Basisstation und mindestens einem Teil der elektronischen Schaltkreise der zentralen Basisstation zu filtern,
wobei die zentrale Basisstation geeignet ist, ausgehende alphanumerische Nachrichten mindestens an das öffentliche Telekommunikationsnetzwerk (3) zu senden und eingehende alphanumerische Nachrichten mindestens aus dem öffentlichen Telekommunikationsnetzwerk zu empfangen, wobei die elektronische Zentraleinheit (5) der zentralen Basisstation geeignet ist, (a) mindestens gewisse eingehende alphanumerische Nachrichten bzw. so genannte Dienstnachrichten, die für ein externes Schnittstellengehäuse (20) bestimmt sind, zu erkennen, und den Schnittstellenschaltkreis (30) der zentralen Basisstation zu veranlassen, auf der Versorgungsleitung (27) eine der jeweiligen eingehenden Dienstnachricht entsprechenden Nachricht zu erzeugen, und (b) festzulegen, wenn sie eine auf der Versorgungsleitung (27) von dem Schnittstellenschaltkreis (30) der zentralen Basisstation erfasste Nachricht empfängt, ob diese Nachricht nach außen zu übermitteln ist und in diesem Fall eine ausgehende alphanumerische Nachricht bzw. ausgehende Dienstnachricht, die der erfassten Nachricht entspricht, zu senden.

2. Zentrale Basisstation nach Anspruch 1, die ferner geeignet ist, ausgehende alphanumerische Nachrichten an mindestens ein Funkkommunikationsperipheriegerät (2) unter Verwendung des Funkkommunikationsprotokolls zu senden und eingehende alphanumerische Nachrichten aus dem Funkkommunikationsperipheriegerät zu empfangen.

3. Zentrale Basisstation nach Anspruch 1 oder 2, bei welcher der Schnittstellenschaltkreis (30) der zentralen Basisstation in Abzweigung an der Versorgungsleitung angeordnet ist.

4. Zentrale Basisstation nach einem beliebigen der vorhergehenden Ansprüche, bei welcher der Schnittstellenschaltkreis (30) der zentralen Basisstation geeignet ist, periodische Signale mit einer Frequenz zwischen 100 und 500 kHz zu senden und zu erfassen.

5. Zentrale Basisstation nach einem beliebigen der vorhergehenden Ansprüche, bei welcher der Schnittstellenschaltkreis (30) der zentralen Basisstation durch die elektronische Zentraleinheit (5) der zentralen Basisstation über einen seriellen Schnittstellencontroller (32) gesteuert wird.

6. Funkkommunikationssystem mit einer zentralen Basisstation (1) gemäß einem beliebigen der vorhergehenden Ansprüche und einem externen Schnittstellengehäuse (20), das sich von der zentralen Basisstation unterscheidet und selbst Folgendes umfasst: eine elektronische Zentraleinheit (34) und einen Schnittstellenschaltkreis (31), der durch die elektronische Zentraleinheit des externen Schnittstellengehäuses gesteuert wird und mit der Versorgungsleitung (25, 27) verbunden ist, wobei dieser Schnittstellenschaltkreis (31) des externen Schnittstellengehäuses geeignet ist, mit dem Schnittstellenschaltkreis (30) der zentralen Basisstation zu kommunizieren, indem Nachrichten über die Versorgungsleitung (25, 27) gesendet und erfasst werden.

7. Funkkommunikationssystem nach Anspruch 6, bei dem der Schnittstellenschaltkreis (31) des externen Schnittstellengehäuses in Abzweigung an der Versorgungsleitung (25, 27) angeordnet ist.

8. Funkkommunikationssystem nach Anspruch 6 oder nach Anspruch 7, bei dem der Schnittstellenschaltkreis (31) des externen Schnittstellengehäuses geeignet ist, periodische, für gesendete und erfasste repräsentative Hochfrequenzsignale zu senden und zu erfassen und das externe Schnittstellengehäuse (20) ein Tiefpassfilter (L2) aufweist, das geeignet ist, die periodischen Hochfrequenzsignale zwischen dem Schnittstellenschaltkreis (31) des externen Schnittstellengehäuses und einer elektrischen Versorgungsvorrichtung (22) zu filtern, welche dazu bestimmt ist, die Versorgungsleitung (25, 27) mit der Außenquelle elektrischer Energie zu verbinden.

9. Funkkommunikationssystem nach Anspruch 6, bei dem der Schnittstellenschaltkreis (31) des externen Schnittstellengehäuses geeignet ist, periodische Signale mit einer Frequenz zwischen 100 und 500 kHz zu senden und zu erfassen.

10. Funkkommunikationssystem nach einem beliebigen der Ansprüche 6 bis 9, bei dem der Schnittstellenschaltkreis (31) des externen Schnittstellengehäuses durch die elektronische Zentraleinheit (34) des externen Schnittstellengehäuses über einen seriellen Schnittstellencontroller (33) gesteuert wird.

11. Funkkommunikationssystem nach einem beliebigen der Ansprüche 6 bis 10, bei dem die zentrale Basisstation (1) und das externe Schnittstellengehäuse (20) geeignet sind, zusammen gemäß einem asynchronen Halbduplexprotokoll zu kommunizieren.

12. Funkkommunikationssystem nach einem beliebigen der Ansprüche 6 bis 11, umfassend ferner ein elektronisches Außengerät (19), das sich von dem externen Schnittstellengehäuse (20) unterscheidet und mit der elektronischen Zentraleinheit (31) des externen Schnittstellengehäuses kommuniziert.

13. Funkkommunikationssystem nach Anspruch 12, bei dem das elektronische Außengerät (19) unter einem Sensor, einem Aktuator und einer zentralisierten Steuerungsvorrichtung, die geeignet ist, mit einer Vielzahl von Sensoren und Aktuatoren verbunden zu werden, gewählt ist.

14. Funkkommunikationssystem nach einem beliebigen der Ansprüche 6 bis 13, mit einer zentralen Basisstation (1) nach Anspruch 1 und bei dem die elektronische Zentraleinheit (34) des externen Schnittstellengehäuses (20) geeignet ist, den Schnittstellenschaltkreis (31) des externen Schnittstellengehäuses zu veranlassen, auf der Versorgungsleitung (25, 27) Nachrichten zu erzeugen, die dazu bestimmt sind, von der zentralen Basisstation (1) als ausgehende Dienstnachrichten gesendet zu werden.
